Europäisches Patentamt

(19) European Patent Office

Office européen des brevets

(11) Veröffentlichungsnummer: **0 119 503**
**B1**

(12) **EUROPÄISCHE PATENTSCHRIFT**

(45) Veröffentlichungstag der Patentschrift:
**10.06.87**

(51) Int. Cl.⁴: **F 16 K 1/52**

(21) Anmeldenummer: **84101793.2**

(22) Anmeldetag: **21.02.84**

(54) **Temperaturabhängig steuerbares Heizungsventil mit Voreinstellvorrichtung.**

(30) Priorität: **08.03.83 DE 3308070**

(43) Veröffentlichungstag der Anmeldung:
**26.09.84 Patentblatt 84/39**

(45) Bekanntmachung des Hinweises auf die Patenterteilung:
**10.06.87 Patentblatt 87/24**

(84) Benannte Vertragsstaaten:
**AT BE CH DE FR GB IT LI LU NL SE**

(56) Entgegenhaltungen:
**DE-A-2 253 462**
**DE-A-2 756 118**

(73) Patentinhaber: **Wella Aktiengesellschaft, Berliner Allee 65, D-6100 Darmstadt (DE)**

(72) Erfinder: **Ebert, Eberhard, Stoppelbergstrasse 19, D-6418 Hünfeld (DE)**
Erfinder: **Fischer, Gerhard, Königsbergstrasse 3, D-6400 Fulda- Lehnerz (DE)**

## Beschreibung

Die Erfindung betrifft ein temperaturabhängig steuerbares Heizungsventil mit einer koaxial zur Achse des Ventils angeordneten, als Drehschieber ausgebildeten Voreinstellvorrichtung und einem als eine Ventilsitz und Ventilkörper enthaltende konstruktive Einheit ausgebildeten, wahlweise in eine hierfür vorgesehen Öffnung einer Heizungsarmatur einsetzbaren Einsatzteil, das im Bereich des Ventilsitzes eine Öffnung hat, die mit einer entsprechenden Öffnung in der das Einsatzteil umgebenden Heizungsarmatur derart kommuniziert, daß durch Verdrehen die Voreinstellung einstellbar ist, wobei das Einsatzteil in Richtung der Achse des Ventils hintereinander angeordnete Hülsen aufweist, die miteinander drehfest verbunden sind und daß die zweite Hülse eine Führung für eine Ventilspindel und eine Ventilsitz in Stellung "offen" drückende Feder aufweist.

Voreinstellbare Radiatorventile gewährleisten eine Stabilisation der Wasserverteilung bei Heizungsanlagen mit zentraler Nachtabsenkung, falls eine Anlage mit mehreren Thermostatventilen Einstelländerungen unterworfen ist.

Ein Heizungsventil gemäß dem Oberbegriff des Anspruchs 1 ist aus der DE-A- 2 253 462 bekannt, wobei die Voreinstellvorrichtung zum Drosseln des Heizwasserstromes im unteren Bereich des Ventilsitzes eine halbmondförmige plane Öffnung aufweist und unterhalb daran mit einer Scheibe kommuniziert, die eine gleiche Öffnung aufweist. Durch Verdrehen der Öffnung des Ventilsitzes läßt sich der wirksame Öffnungsquerschnitt beider Öffnungen einstellen. Von Nachteil hierbei ist, daß nur eine grobe Drosselung vornehmbar ist, besonders im Bereich der größten Drosselung bzw. im Bereich des kleinsten wirksamen Öffnungsquerschnitts.

Außerdem ist es fertigungstechnisch aufwendig, einen planen Sitz der Scheibe zu erreichen. Eine Anpassung der Drosselvoreinstellung für verschiedene Größen der Heizungsarmatur bzw. der Heißwasserdurchflußmengen ist nicht vorgesehen.

Aus der DE-A-2 756 118 sind bei einem Heizungsventil seitlich angeordnete Voreinstellungsöffnungen bekannt, die durch eine nicht näher beschriebene verlängerte kerbenartige Ausnehmung an der verdrehbaren Öffnung eine Feineinstellung bewirken soll und keine Lehre für die Ausgestaltung einer Voreinstellvorrichtung mit hoher Genauigkeit der Feineinstellung vermittelt. Auch hier ist eine Anpassung der Drosselvoreinstellung für verschiedene Größen der Heizungsarmatur bzw. der Heißwasserdurchflußmengen nicht vorgesehen.

Es ist Aufgabe der Erfindung, ein neuartiges temperaturabhängiges Heizungsventil mit Drosselvoreinstellung anzugeben, welches bei vorgegebener Größe der Heizungsarmatur eine höhere Einstellgenauigkeit ermöglicht, durch einfache konstruktive Maßnahmen einfacher und daher preiswerter herstellbar und besonders wartungsfreundlich ist.

Diese Aufgabe wird bei einem Heizungsventil der eingangs genannten Art durch die im Kennzeichen des Patentanspruches angegebenen technischen Maßnahmen gelöst.

Dadurch, daß die erste Hülse mit einer im wesentlichen halbkreisförmigen seitlichen Zone und eine sich daran unmittelbar anschließende, sich in Richtung des Umfanges der ersten Hülse erstreckende längere Zone wesentlich geringerer Breite aufweist, ist eine höhere Einstellgenauigkeit der Drosselvoreinstellung möglich.

Eine Anpassung der Drosselvoreinstellung für verschiedene Größen der Heizungsarmatur bzw. der Heißwasserdurchflußmengen wird dadurch erreicht, daß die erste Hülse mit einem wahlweisen Durchmesser des Ventilsitzes und einer dazu korrespondierenden Größe der Drosselöffnung versehen ist.

Die erste Hülse läßt sich kostengünstig aus Kunststoff herstellen.

Eine einfach technische Lösung einer Abdichtung ist durch eine Dichtung gegeben, die den Raum zwischen der Innenseite der zweiten Hülse und der Ventilspindel abdichtet, wobei die zweite Hülse auf der vom Ventilkörper abgewendeten Seite der Dichtung durch ein die Führung der Ventilspindel enthaltendes eingeschraubtes Bauteil verschlossen ist.

Ein einfacher Zusammenbau des kompletten Einsatzteils mit der Heizungsarmatur durch lediglich eine Ringschraube ist dadurch gegeben, daß einerseits die zweite Hülse außen einen vorzugsweise in einer Rille angeordneten, rundumlaufenden Dichtungsring trägt, der den Zwischenraum zwischen dem Einsatzteil und der diesen umschließenden Wand der Heizungsarmatur abdichtet, andererseits die erste Hülse in ihrem unteren Endbereich außen einen vorzugsweise in einer Rille angeordneten rundumlaufenden Dichtungsring trägt.

Durch die Unterteilung des Einsatzteiles in zwei miteinander drehfest verbundene Einzelteile ergibt sich tatsächlich eine preiswertere Herstellung, denn statt eines verhältnismäßig sehr komplizierten und daher ziemlich teuer herstellbaren Bauteils können nun zwei wesentlich einfacher gestaltete und daher billigere Bauteile verwendet werden; dadurch können auch die beiden Einzelteile (mit Ausnahme der Ventilspindel und Ventilfeder etc.) aus Kunststoff gefertigt werden, was bei der in Frage kommenden hohen Stückzahl eine erhebliche Verbilligung bedeutet. Außerdem ergibt sich die für die Wartung interessante Möglichkeit, den Ventilsitz durch Auswechseln der einen billig herstellbaren Hülse zu erneuern, was mit wenigen Handgriffen durchführbar ist.

Die Kosten für Material und der Zeitaufwand, also die Kosten für die Arbeitszeit, werden gegenüber den bisher üblichen Ventilen ganz wesenlich verringert und die Wartung vereinfacht.

Weitere Fortbildungen und Ausgestaltungen der Erfindung sind in den Unteransprüchen gekennzeichnet und werden nachstehend in Verbindung mit den Ausführungsbeispiele darstellenden, zum Teil schematisch vereinfachten Figuren beschrieben. In diesen sind einander entsprechende Teile mit gleichen Bezugszeichen versehen, und es sind alle zum Verständnis der Erfindung nicht notwendigen Einzelheiten fortgelassen worden.

Es zeigt:

Fig. 1 ein als Durchlaufventil ausgebildetes, gemäß der Erfindung ausgeführtes Heizungsventil im Längsschnitt, von der Seite gesehen;

Fig. 2 eine Draufsicht auf das in Fig. 1 dargestellte Durchlaufventil;

Fig. 3 eine Draufsicht auf den in Fig. 1 durch die Linie A-A angedeuteten Schnitt;

Fig. 4 als konstruktives Detail den Ventilkörper und Ventilsitz sowie den die zugeordneten Bauteile enthaltenden Einsatz im Längsschnitt;

Fig. 5 als konstruktives Detail die Abwicklung der Öffnung in dem den Ventilsitz enthaltenden Einsatzteil;

Fig. 6 ein als Eckventil ausgebildetes, gemäß der Erfindung ausgeführtes Heizungsventil im Längsschnitt;

Fig. 7 ein als Eckventil ausgebildetes, gemäß der Erfindung ausgeführtes Heizungsventil in Draufsicht;

Fig. 8 eine Draufsicht auf den in Fig. 5 durch die Linie B - B angedeuteten Schnitt;

Fig. 9 ein gemäß der Erfindung ausgeführtes Ventil für die Abzweigung einer Teilmenge im Schnitt;

Fig. 10 das Ventil gemäß Fig. 9 in Seitenansicht.

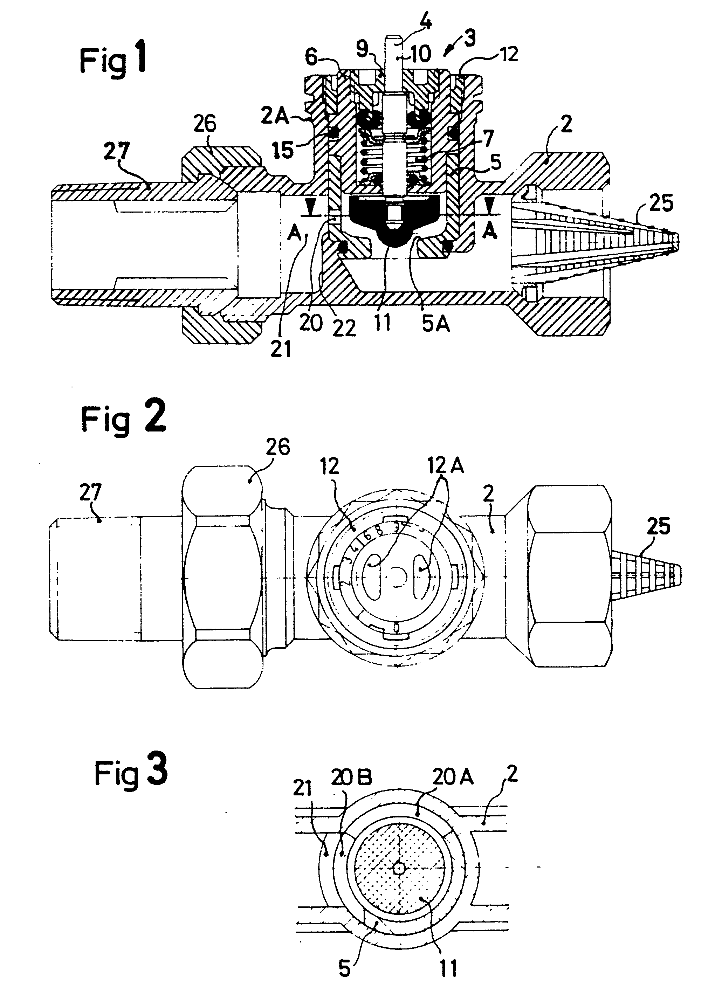

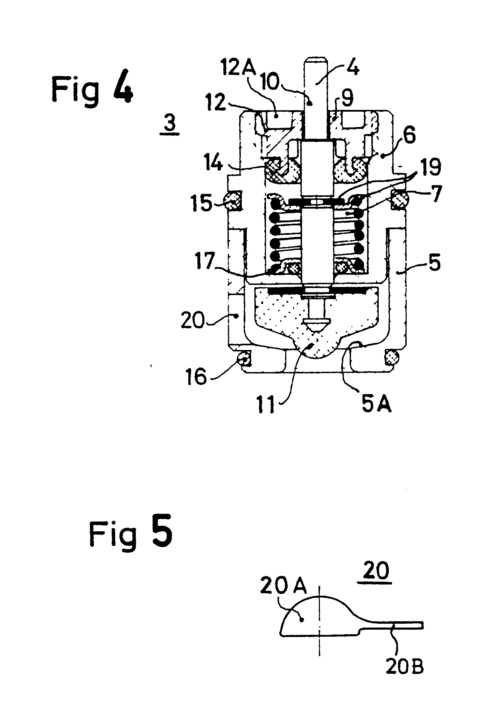

Das in den Figuren 1 bis 3 dargestellte Heizungsventil besteht im wesentlichen aus einer Heizungsarmatur 2, das einen rohrförmigen Ansatz 2A hat, in den ein Einsatzteil 3 eingesetzt ist. Dieses Einsatzteil 3 ist in Fig. 4 in größerem Maßstab gezeichnet. Das Einsatzteil 3 hat zwei in Richtung der Achse 4 hintereinander angeordnete Hülsen und zwar eine erste Hülse 5, deren unterer innerer Bereich als Ventilsitz 5A dient, und eine in den oberen Bereich dieser ersten Hülse 5 eingesetzte zweite Hülse 6, welche die Ventilfeder 7 und die Führung 9 für die Ventilspindel 10 enthält. An dem dem Ventilsitz zugewendeten Ende der Ventilspindel 10 ist der Ventilkörper 11 in an sich bekannter Weise befestigt. Die Führung 9 wird vom dem zentralen Teil eines in das Einsatzteil 3 eingeschraubten Bauteiles 12 gebildet. Dieses Bauteil 12 hat Vertiefungen 12A, in welche ein (nicht dargestelltes) Werkzeug zum Zwecke des Einschraubens oder Ausschraubens eingesetzt werden kann. Innerhalb der zweiten Hülse 6 befindet sich zwischen Bauteil 12 und Feder 7 eine ringförmige Dichtung 14, welche den Innenraum zwischen der zweiten Hülse 6 und der Ventilspindel 10 abdichtet. Die zweite Hülse 6 trägt einen in einer Rille angeordneten, umlaufenden Dichtungsring 15, der den Zwischenraum zwischen dem Einsatzteil 3 und der ihn umschließenden Wand der Heizungsarmatur 2 abdichtet. Die erste Hülse 5 hat in ihrem unteren Endbereich außen eine umlaufende Rille, in der ein umlaufender Dichtungsring 16 angeordnet ist.

Die im Inneren der zweiten Hülse 6 befindliche Ventilfeder 7 stützt sich über ein tellerförmiges Zwischenstück 17 gegen den Boden der zweiten Hülse 6 und drückt über entsprechende Zwischenglieder 19 die Ventilspindel 10 nach oben, so daß der Ventilkörper 11 in die obere Grenzlage gehoben und das Ventil geöffnet ist.

Wird durch eine an sich bekannte, in den Figuren nicht dargestellte, temperaturabhängige Steuervorrichtung auf das obere Ende der Ventilspindel 10 ein die Federkraft überwindender Druck ausgeübt, dann wird der Ventilkörper 11 abwärts bewegt, der freie Durchgang zwischen Ventilsitz 5A und Ventilkörper 11 verringert und gegebenenfalls das Ventil in Sperrstellung gebracht.

Die erste Hülse 5 hat in der Nähe des Ventilsitzes 5A eine seitliche Öffnung 20, welche mit einer entsprechenden Öffnung 21 in der das Einsatzteil 3 umgebenden Heizungsarmatur 2 kommuniziert. Die Öffnung 21 wird durch eine Aussparung in einer sich quer zur Strömungsrichtung erstreckenden, nach innen vorspringenden Wand oder Kippe 22 der Heizungsarmatur 2 gebildet.

Fig. 5 zeigt eine Abwicklung der sich entlang des Umfanges der ersten Hülse 5 erstreckenden Öffnung 20. Diese Öffnung besteht aus einer im wesentlichen halbkreisförmigen Zone 20A, deren größter Durchmesser sich in Richtung des genannten Umfanges erstreckt und aus einer sich daran unmittelbar anschließenden, sich ebenfalls in Richtung des Umfanges der ersten Hülse erstreckenden längeren Zone 20B mit wesentlich geringerer Breite. Die Zonen 20A und 20B erstrecken sich über jeweils ein Viertel des Umfanges, wie aus Fig. 3 zu ersehen ist. Durch Verdrehen der ersten Hülse 5 relativ zur Heizungsarmatur 2 verschieben sich die Bereiche 20A und 20B der Öffnungen 20 relativ zu der in der Heizungsarmatur 2 vorgesehenen Öffnung 21. Da die beiden Hülsen 5 und 6 drehfest miteinander gekoppelt sind, kann durch Verdrehen des Einsatzteiles 3, relativ zur Heizungsarmatur 2, die jeweils gewünschte Voreinstellung gewählt werden.

Gegenüber bekannten derartigen Heizungsventilen zeichnet sich das erfindungsgemäße Heizungsventil unter anderem dadurch aus daß bei vorgegebener Größe der Heizungsarmatur bzw. vorgegebenem Durchmesser des Ansatzes 2A eine größere Länge der schlitzartigen Öffnung 20 zur Verfügung steht und damit eine höhere Einstellgenauigkeit möglich wird.

In den Figuren ist ferner ein Filtereinsatz 25 gezeichnet, welcher auf der Zulaufseite der Heizungsarmatur 2 eingesetzt ist. In den Figuren 1, 2, 6 und 7 sind ferner Anschlußstücke 26 und 27 eingezeichnet.

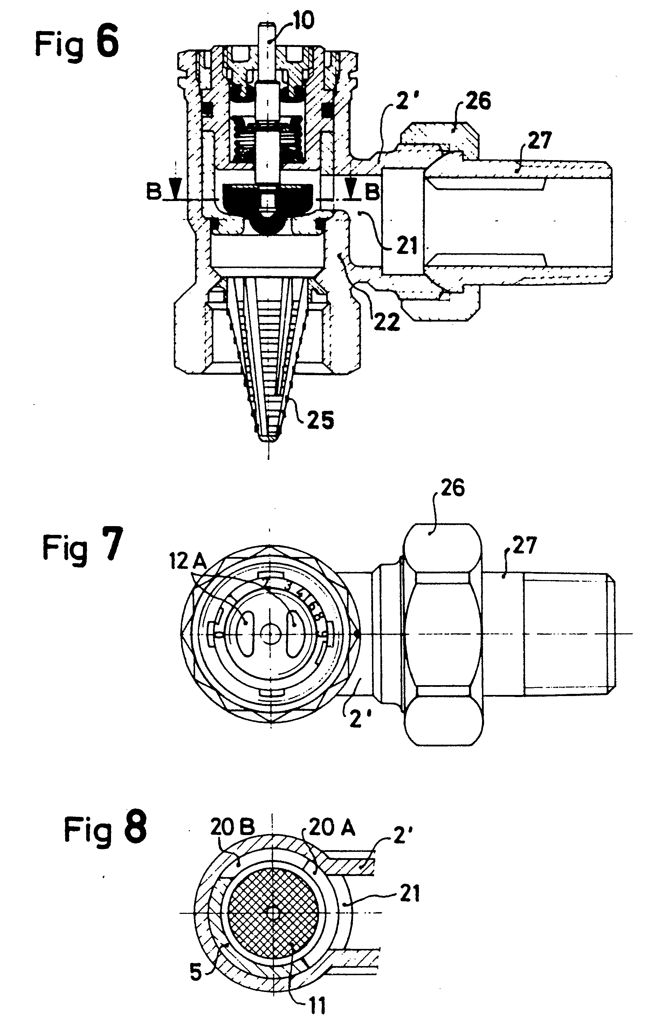

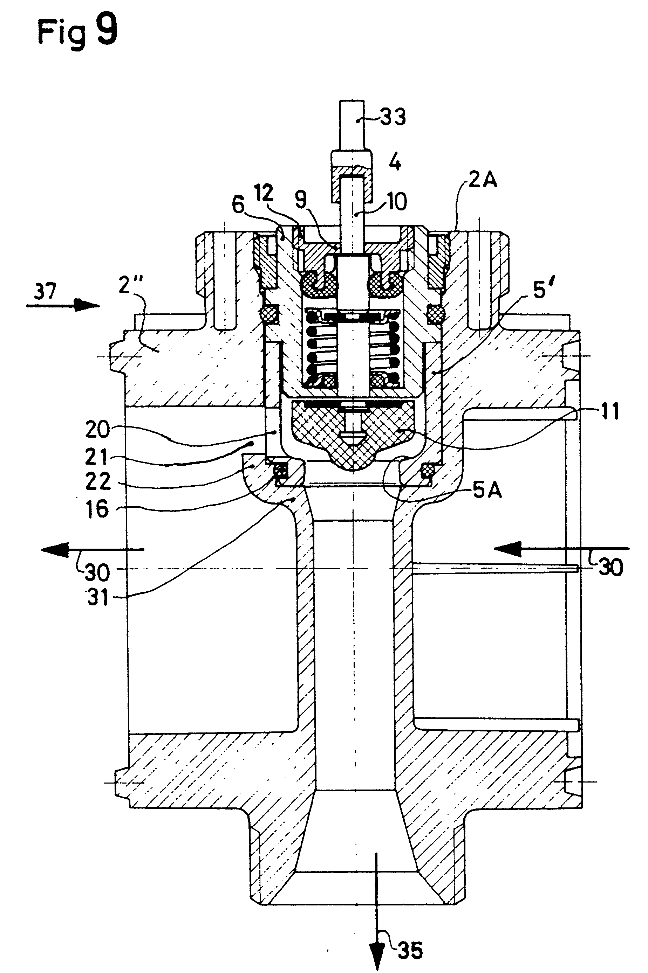

Während die Figuren 1 bis 3 das erfindungsgemäße Heizungsventil in Ausführungsform eines Durchlaßventils zeigen, betreffen die Figuren 6 bis 8 eine Ausführungsform als Eckventil. Das Einsatzteil 3 ist bei diesen beiden Ausführungsformen und auch bei der in Fig. 9 dargestellten Ausführungsform als Abzweigventil in gleicher Weise ausgebildet und diese Einsatzteile sind untereinander austauschbar. Infolgedessen gelten die vorstehenden Ausführungen über die Konstruktion und Wirkungsweise des Ventiles in gleicher Weise für die Ausführungsformen mit einer Heizungsarmatur 2 für Durchlaßventile, einer Heizungsarmatur 2' für Eckventile und einer Heizungsarmatur 2'' für Abzweigventile. Zu den Ausführungsformen als Eckventil sind infolgedessen keine weiteren ergänzenden Erläuterungen erforderlich.

Bei dem in Fig. 9 in Längsschnitt dargestellten Heizungsventil ist das Einsatzteil 3 für die Abzweigung einer Teilmenge des die Heizungsarmatur 2, 2' in Richtung der Pfeile 30 durchfließenden Wassermenge in einem Rohr 31 angeordnet. Dieses verläuft quer zu der durch die Pfeile 30 angedeuteten Strömung durch das Innere der Heizungsarmatur. In einem erweiteren Endbereich dieses Rohres 31 befindet sich die seitliche Öffnung 21. Das das Bauteil 3 aufnehmende, nach außen ragende Ansatzstück 2A ist konzentrisch zum Rohr 31 angeordnet.

Wird das Einsatzteil 3 relativ zur Heizungsarmatur um die Achse 4 verdreht, dann verschiebt sich die (in Hülse 5' vorsehene) Öffnung 20 relativ zu der in der Seitenwand des Rohres 31 vorgesehenen Öffnung 21 und die Voreinstellung wird in der gleichen Weise bewirkt, wie vorstehend beschrieben.

Am oberen Ende der Ventilspindel 10 ist ein mit der (nicht dargestellten) Temperatursteuereinrichtung verbundenes Koppelstück 33 angedeutet.

Bei geöffnetem Ventil, also bei der in Fig. 9 gezeichneten Stellung, fließt eine von dem die Heizungsarmaturen 2, 2' in Richtung der Pfeile 30 durchfließenden Wasserstrom abgezweigte Teilmenge durch das Rohr 31 in Richtung des Pfeiles 35.

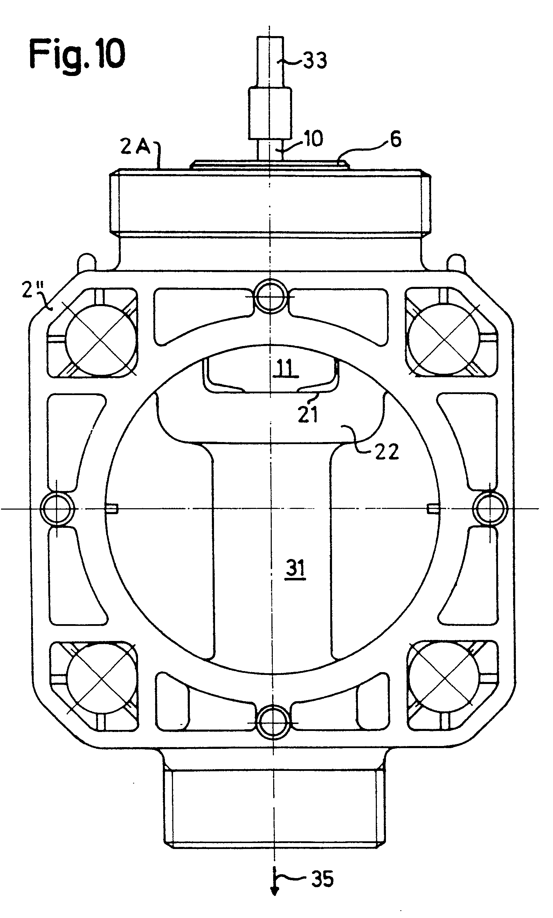

Fig. 10 zeigt das in Fig. 9 dargestellte Heizungsventil von der Seite her in Richtung des Pfeiles 37 der Fig. 9 gesehen. Die Öffnung 21 in dem erweiterten Endbereich des Rohres 31 ist deutlich zu sehen. Dahinter ist der Ventilkörper 11 sichtbar, da bei der in den Fig. 9 und 10 gezeichneten Stellung die Hülse 5' in diejenige Stellung gedreht ist, in der die in der Hülse 5' befindliche Zone 20A der Öffnung 20 die Öffnung 21 voll freigibt.

**Bezugszeichenliste**

2 Heizungsarmatur
2' Heizungsarmatur
2'' Heizungsarmatur
2A rohrförmiger Ansatz
3 Einsatzteil
4 Achse
5,5' erste Hülse
5A Ventilsitz
6 zweite Hülse
7 Ventilfeder
9 Führung
10 Ventilspindel
11 Ventilkörper
12 Bauteil
12A Vertiefungen
14 ringförmige Dichtung
15 Dichtungsring
16 Dichtungsring
17 Zwischenstück (tellerförmig)
19 Zwischenglied
20 Öffnung
20A halbkreisförmige Zone
20B halbkreisförmige Zone
21 seitliche Offnung
22 Rippe bzw. vorspringende Wand
25 Filtereinsatz
26 Anschlußstück
27 Anschlußstück
30 Pfeile
31 Rohr
33 Koppelstück
35 Pfeile
37 Pfeil

**Patentansprüche**

1. Temperaturabhängig steuerbares Heizungsventil mit einer koaxial zur Achse des Ventils angeordneten, als Drehschieber ausgebildeten Voreinstellvorrichtung und einem als eine Ventilsitz (5 A) und Ventilkörper (11) enthaltende konstruktive Einheit ausgebildeten, wahlweise in eine hierfür vorgesehene Öffnung (38) einer Heizungsarmatur (2, 2', 2'') einsetzbaren Einsatzteil (3), das im Bereich des Ventilsitzes (5 A) eine Öffnung (20) hat, die mit einer entsprechenden Öffnung (21) in der das Einsatzteil (3) umgebenden Heizungsarmatur (2, 2', 2'') derart kommuniziert, daß durch Verdrehen die Voreinstellung einstellbar ist, wobei das Einsatzteil (3) in Richtung der Achse des Ventils hintereinander angeordnete Hülsen (5, 5', 6) aufweist, die miteinander drehfest verbunden sind und daß die zweite Hülse (6) eine Führung (9) für eine Ventilspindel (10) und eine den Ventilsitz (5 A) in Stellung "offen" drückende Feder (7) aufweist, dadurch gekennzeichnet, daß die erste Hülse (5, 5') einstückig ausgebildet ist und den Ventilsitz (5 A) enthält und im Bereich dieses Ventilsitzes (5 A) eine seitliche Öffnung (20) hat, die mit einer entsprechenden Öffnung

(21) in der das Einsatzteil (3) umgebenden Heizungsarmatur (2) kommuniziert, wobei die Öffnung (20) in der ersten Hülse (5, 5') aus einer im wesentlichen halbkreisförmigen Zone (20 A) und einer daran unmittelbar anschließenden, sich in Richtung des Umfanges der ersten Hülse (5, 5') erstreckenden längeren Zone (20 B) wesentlich geringere Breite hat.

2. Heizungsventil nach Anspruch 1, dadurch gekennzeichnet, daß die erste Hülse (5, 5') mit einem wahlweisen Durchmesser des Ventilsitzes (5 A) und einer dazu korrespondierenden Größe der Öffnung (20) versehen ist.

3. Heizungsventil nach den Ansprüchen 1 und 2, dadurch gekennzeichnet, daß die erste Hülse (5, 5') aus Kunststoff besteht.

4. Heizungsventil nach Anspruch 1, gekennzeichnet durch eine Dichtung (14), welche den Raum zwischen der Innenseite der zweiten Hülse (6) und der Ventilspindel (10) abdichtet.

5. Heizungsventil nach Anspruch 4, dadurch gekennzeichnet, daß die zweite Hülse (6) auf der vom Ventilkörper (11) abgewendeten Seite der Dichtung (14) durch ein die Führung (9) der Ventilspindel ((10) enthaltendes eingeschraubtes Bauteil (12) verschlossen ist.

6. Heizungsventil nach Anspruch 1, dadurch gekennzeichnet, daß die zweite Hülse (6) außen einen vorzugsweise in einer Rille angeordneten, rundumlaufenden Dichtungsring (15) trägt, der den Zwischenraum zwischen dem Einsatzteil (3) und der diesen umschließenden Wand der Heizungsarmatur (2) abdichtet.

7. Heizungsventil nach Anspruch 1, dadurch gekennzeichnet, daß die erste Hülse (5, 5') in ihrem unteren Endbereich außen einen vorzugsweise in einer Rille angeordneten rundumlaufenden Dichtungsring (16) trägt.

8. Heizungsventil nach Anspruch 1, dadurch gekennzeichnet, daß der Einsatz (3) in einem rohrförmigen, nach außen ragenden Ansatzstück (2 A) der Heizungsarmatur (2) angeordnet ist und die seitliche Öffnung (20) der ersten Hülse (5, 5') mit einer seitlichen Öffnung (21) in dem ins Innere der Heizungsarmatur (2) ragenden Teil (22) des Rohres (31) kommuniziert (Fig. 1, 3).

9. Heizungsventil nach Anspruch 1, gekennzeichnet durch eine derartige Anordnung des Einsatzes (3) in einer Eckventilarmatur (2'), daß die Achse (4) der Öffnung des Ventilsitzes (5 A) koaxial zur Achse des einen Anschlußrohres, vorzugsweise des Zulaufrohres, ist und die seitliche Öffnung (20) der ersten Hülse (5, 5') mit einer Öffnung (21) in einer die andere Rohrleitung abschließenden Querwand (22) kommuniziert (Fig. 6, 8).

10. Heizungsventil nach Anspruch 1, dadurch gekennzeichnet, daß der Einsatz (3) in einem rohrförmigen Teil der Heizungsarmatur (2'') angeordnet ist, der in einem rohrförmigen, im Inneren der Heizungsarmatur (2'') quer zur Strömungsrichtung (Pfeil 30) des sie durchströmenden Wassers erstreckenden rohrförmigen Teil (31) angeordnet ist, der seitlich eine Öffnung (21) hat, die mit der in der ersten Hülse (5, 5') seitlich angeordnenten Öffnung (20) kommuniziert (Fig. 9).

## Claims

1. A temperature dependent controllable heating valve with a presetting device disposed coaxially to the axis of the valve and designed as a rotary disc valve and an insertion piece designed as a constructional unit containing a valve seat (5A) and valve body (11) selectively insertable in an opening (38) of a heating armature (2, 2', 2'') provided for this purpose, which in the region of the valve seat has an opening (20), which communicates with a corresponding opening (21) in the heating armature (2, 2', 2'') surrounding the insertion part in such a way that the presetting is adjustable by tturning, the insertion part (3) having casings (5, 5', 6) arranged one behind the other in the direction of the axis of the valve, which are rigidly connected to one another and that the second casing (6) has a guide (9) for a valve rod (10) and a spring (7) which presses the valve seat (5A) in the "open" position, that the second casing (5, 5') is formed in one piece and contains the valve seat (5 A) and has in the region of this valve seat (5A) a lateral opening, which communicates with a corresponding opening (21) in the heating armature (2) surrounding the insertion piece (3), the opening in the first casing (5, 5') with a substantially semi-circular zone (20A) and a longer zone (20B) directly adjacent thereto extending in the direction of the circumference of the first casing (5, 5') being substantially narrower.

2. A heating valve according to claim 1, characterised in that the first casing (5, 5') is provided with a selective diameter of the valve seat (5A) and a size of opening (20) corresponding thereto.

3. A heating valve according to claims 1 and 2, characterised in that the first casing (5, 5') is made of plastics material.

4. A heating valve according to claim 1, characterised by a seal (14), which seals the space between the inside of the second casing (6) and the valve rod (10).

5. A heating valve according to claim 4, characterised in that the second casing (6) is sealed on the side of the seal (14) remote from the valve body (11) by means of a screwed-in component (12) containing the guide (9) of the valve rod (10).

6. A heating valve according to claim 1, characterised in that the second casing (6) on the outside supports a rotating sealing ring (15) arranged preferably in a groove, sealing the interspace between the insertion part (3) and the surrounding wall of the heating armature (2).

7. A heating valve according to claim 1, characterised in that the first casing (5, 5') supports in its lower region a rotating sealing ring (16) preferably arranged in a groove.

8. A heating valve according to claim 1, characterised in that the insert (3) is arranged in a tubular outwardly projecting projection piece (2A) of the heating armature (2) and the lateral opening (20) of the first casing (5, 5') communicates with a lateral opening in the portion (22) of the pipe (31) projecting inside the heating armature (2) (Figs. 1, 3).

9. A heating valve according to claim 1, characterised by such an arrangement of the insert (3) in an angle valve armature (2') that the axis (4) of the opening of the valve seat (5A) is co-axial to the axis of one connection pipe, preferably the supply pipe, and the lateral opening (20) of the first casing (5, 5') communicates with an opening (21) in a transverse wall (22) which seals the other tube line.

10. A heating valve according to claim 1, characterised in that the insert (3) is arranged in a tubular part of the heating armature (2"), which part is arranged in a tubular part (31) which extends inside the heating armature (2") transverse to the direction of flow (arrow 30) of the water flowing through it, the part having laterally an opening (21), which communicates with the opening arranged laterally in the first casing (5, 5,) (Fig. 9).

## Revendications

1. - Soupape de chauffage pouvant être commandée en fonction de la température, comportant un dispositif de préréglage conformé en tiroir rotatif, disposé coaxialement par rapport à l'axe de la soupape et une garniture réalisée sous la forme d'un seul bloc comprenant un siège de soupape (5A) et un corps de soupape (11), pouvant être introduite à volonté dans une ouverture (38) prévue pour cela, d'une robinetterie de chauffage (2, 2', 2"), qui comporte, dans la zone du siège de soupape (5A), une ouverture (20) qui communique avec une ouverture (21) correspondante de la robinetterie de chauffage (2, 2', 2") entourant la garniture (3) de telle façon qu'on peut régler par rotation le préréglage, la garniture (3) comportant des douilles (5, 5', 6) disposées successivement dans la direction de l'axe de la soupape, qui sont solidaires en rotation entre elles, et que la seconde douille (6) comporte un guide (9) pour une tige de soupape (10) et un ressort (7) repoussant le siège de soupape (5A) en position "ouverte", que la première douille (5, 5') est réalisée d'un seul tenant et contient le siège de soupape (5A) et comporte, dans la zone de ce siège de soupape (5A), une ouverture latérale (20) qui communique avec une ouverture (21) correspondante de la robinetterie de chauffage (2) entourant la garniture, l'ouverture (20) de la première douille (5, 5') comprenant une zone sensiblement semi-circulaire (20A) et une zone plus allongée (20B) s'étendant dans la direction de la périphérie de la première douille (5, 5'), s'y raccordant directement, ayant une largeur beaucoup plus faible.

2. - Soupape de chauffage selon la revendication 1, caractérisée en ce que la première douille (5, 5') présente un diamètre quelconque du siège de soupape (5A) et une dimension de l'ouverture (20) qui y correspond.

3. - Soupape de chauffage selon les revendications 1 et 2, caractérisée en ce que la première douille (5, 5') est en matière plastique.

4. - Soupape de chauffage selon la revendication 1, caractérisée par un joint (14) qui isole hermétiquement l'espace compris entre la face intérieure de la seconde douille (6) et la tige de soupape (10).

5. - Soupape de chauffage selon la revendication 4, caractérisée en ce que la seconde douille (6) est fermée, du coté du joint (14) opposé au corps de soupape (11), par un composant (12) vissé, comprenant le guide (9) de la tige de soupape (10).

6. - Soupape de chauffage selon la revendication 1, caractérisée en ce que la seconde douille (6) comporte extérieurement une bague d'étanchéité (15) en faisant tout le tour, placée de préférence dans une gorge, qui isole hermétiquement l'intervalle entre la garniture (3) et la paroi de la robinetterie de chauffage (2) qui l'entoure.

7. - Soupape de chauffage selon la revendication 1, caractérisée en ce que la première douille (5, 5') comporte extérieurement, dans sa zone terminale inférieure, une bague d'étanchéité (16) en faisant tout le tour, placée de préférence dans une gorge.

8. - Soupape de chauffage selon la revendication 1, caractérisée en ce que la garniture (3) est placée dans un embout (2A) tubulaire, faisant saillie vers l'extérieur, de la robinetterie de chauffage (2), et en ce que l'ouverture latérale (20) de la première douille (5, 5') communique avec une ouverture latérale (21) de la partie (22) du tube (31) pénétrant à l'intérieur de la robinetterie de chauffage (2) (figures 1, 3).

9. - Soupape de chauffage selon la revendication 1, caractérisée en ce que la garniture (3) est disposée dans un robinet-vanne à soupape d'équerre (2') de telle façon que l'axe (4) de l'ouverture du siège de soupape (5A) est coaxial par rapport à l'axe d'un premier tuyau de raccordement, de préférence le tuyau d'arrivée, tandis que l'ouverture latérale (20) de la première douille (5, 5') communique avec une ouverture (21) d'une paroi transversale (22) fermant l'autre tuyau (figures 6, 8).

10. - Soupape de chauffage selon la revendication 1, caractérisée en ce que la garniture (3) est placée dans une partie tubulaire de la robinetterie de chauffage (2"), qui est placée dans une partie tubulaire (31) s'étendant à l'intérieur de la robinetterie de chauffage (2") transversalement par rapport à la direction d'écoulement (flèche 30) de l'eau qui la traverse, qui comporte latéralement une ouverture (21) qui communique avec l'ouverture (20) placée latéralement dans la premiére douille (5, 5') (figure 9).

Fig 1

Fig 2

Fig 3

Fig **4**

Fig **5**

**Fig 6**

**Fig 7**

**Fig 8**

# Fig 9

# Fig. 10